# EUROPEAN PATENT SPECIFICATION

(11) **EP 2 614 952 B1**
(45) Date of publication and mention of the grant of the patent: **30.03.2016**
(21) Application number: 10766300.7
(22) Date of filing: 06.09.2010
(51) Int. Cl.: B29C 57/02, B29B 13/02

(54) **DEVICE AND METHOD FOR PRODUCING THE MOUTHS OF BIAXIALLY ORIENTED PLASTIC TUBES WITH INTEGRATED SEALING GASKETS**
VORRICHTUNG ZUR HERSTELLUNG BIAXIAL ORIENTIERTER KUNSTSTOFFROHRANSÄTZE MIT INTEGRIERTER DICHTUNG UND ENTSPRECHENDER HERSTELLUNGSPROZESS
DISPOSITIF POUR PRODUIRE LES EXTRÉMITÉS ORIENTÉES BIAXIALEMENT D'UN TUBE PLASTIQUE AVEC JOINT INTÉGRÉ ET PROCÉDÉ CORRESPONDANT

(43) Date of publication of application: 17.07.2013
(73) Proprietor: Molecor Tecnologia, S.L., 28840 Mejorada Del Campo (ES)
(72) Inventor: MUÑOZ DE JUAN, Ignacio, E-28840 Mejorada del Campo (Madrid) (ES)
(74) Representative: Pons Ariño, Angel
(86) International application number: PCT/ES2010/070580
(87) International publication number: WO 2012/032195

(56) References cited:
- EP-A1- 0 685 317
- EP-A1- 0 930 148
- WO-A1-97/10942
- US-A1- 2001 005 064

## Description

### OBJECT OF THE INVENTION

The invention is included within the field of the manufacturing processes of molecularly oriented profiles, in particular with the so called in-batch systems.

The present invention relates to an apparatus to form the socket of a biaxially oriented pipe with integration of the elastomeric gasket, whereby it manages to maintain intact the grades of orientation and thicknesses provided in the critical areas of the pipe.

Likewise, another object of the invention relates to the process for forming the socket of the molecularly oriented plastic pipe with integration of the gasket, within the pipe production process in a discontinuous or in-batch system.

### BACKGROUND OF THE INVENTION

Molecular orientation is a process whereby, applying a mechanical deformation to a previously extruded pipe or blank, in suitable conditions of temperature, pressure, deformation rate and radius of deformation, principally, a substantial modification occurs of its mechanical properties, mainly the sigma of the material, the resistance to impact, improves creep, resistance to the spreading of cracks, improves the Young modulus, etc.

Said molecular orientation process achieves an ultra-resistant pipe, with less raw materials and with the same or greater performance, thanks to the greater resistance of the material.

There are various methods or systems for the manufacturing of tubular profiles, which can be grouped in two broad categories: continuous or in-line systems and discontinuous or in-batch systems.

The discontinuous or in-batch systems are mainly based on producing the molecular orientation element by element, which is achieved by an expansion of the blank within a mould that provides the definitive form of the tubular profile.

The in-line processes are radically different and the orientation occurs continuously and simultaneously to that of the actual extrusion, with no interruptions occurring in the process, nor intermediate stock, etc.

The oriented pipes must be joined together to form the conduction line and this can be done in two forms: by sleeves, which are independent interconnection parts over pipes of circular section, or by the formation of a socket in each pipe, which makes it possible to introduce one end of a pipe in another, each tube having two different ends, one smooth and another with a socket, and the line is constituted in this manner, so that there is sufficient space to house a gasket of flexible material, which guarantees a hermetic sealing of the network.

The continuous or in-line processes, due to their very mature, require that the socket process is a separate process from that of the orientation, for which purpose special machines are required which, in a phase subsequent to that of the orientation, make the socket.

The discontinuous or in-batch processes allow the socket to be made integrally, i.e. it is formed at the same time the pipe is formed, or made similarly to the aforementioned, as a process external to that of orientation of the pipe.

Numerous patent documents can be cited for the performance of non-integral sockets, as an extra process, the following being representative:

Document WO200209926 develops a heating system of the oriented pipe by water, limiting the heating zone with two caps so that once heated and under pressure the pipe is formed against a mold which provides the shape. Subsequently, the blank is cooled and the water is extracted. The system described in this document permits good temperature regulation, but it is very slow and lacks a thickness control.

Likewise, document EP0930148 can be cited wherein the heating occurs using a machine which heats the zone to form the pipe, at a temperature similar to that of the orientation. Subsequently, a pointed expansion element is inserted, which causes that the heated material in plastic state forms against the silhouette of this expansion element, to be then cooled below the temperature of the plastic-solid transition. Once cooled, the parts forming the rubber gasket are retracted, until the expansion element has a constant sector, and this element exits the interior of the already formed pipe.

Within the systems for the making of integral sockets, we can cite document US4340344, WO9856567 and WO AU9000265. In all cases, the system consists of, at one end of the mould, a cavity is made where, on expanding the pipe, and a part of the pipe expands on this section, giving rise to the socket, it subsequently being cooled by contact of the pipe metal on the mould.

In said documents, in all cases the gasket is an element positioned after the final formation of the socket.

There are patent documents for oriented pipes which include a system for housing gaskets in the sockets in integral manner, such as WO97/10942 and US 5,653,935.

Document US 5,653,935 discloses a system and method for formation of the socket whereby and from a semi-formed socket, a metal mandrel carrying an elastomeric gasket is introduced. This mandrel-socket-gasket assembly is introduced in a climatic chamber at a high temperature, and thanks to the properties of the oriented plastic, this shrinks and adopts the form of the mandrel and gasket. The main problem of this system is that in the overall heating of the socket, this does not only shrink radially but also axially, giving rise to a loss of the axial orientation affecting the mechanical properties of the socket. On the other hand, on allowing the plastic to be freely formed, thanks to air heating, this may adopt imperfect forms due to the different stresses within the plastic as well as through the imperfect heating that a chamber such as that disclosed can provide, the heating being more efficient in some parts than in others and for which purpose the shrinking occurs in uncontrolled manner. This effect is particularly notable at the end of the socket lip, where, instead of a straight section, it generally has a warped surface. Likewise, perfect contact with the inner shaft is not guaranteed.

In the case of document WO97/10942 the differences are even more notable, since it is a system devised for in-line systems instead of in-batch systems, as included in the present invention. Here, a process is described which consists of several steps and different mandrels to make the socket. Furthermore, as recognised in the invention WO97/10942, in this process not only is freedom given to the plastic in its shrinking so that it loses its axial orientation, but that, in the different process phases, axial compression occurs that causes a loss of orientation but just the opposite effect, a compression which contributes to embrittling the pipe socket. Generically, it can be stated that both documents include forms of making sockets and positioning gaskets, but without bearing in mind the main factor of the bioriented pipes and their sockets: the index of orientation (directly proportional to the stretching). In both solutions, a socket can be achieved by more or less efficient procedures, but in both cases losing the stretching provided during the orientation and causing a socket with mechanical properties poorer than the initial pipe.

Another document which includes systems for manufacturing sockets in bioriented or oriented pipes is US 6,383,435. In this case, we again find that the process for making sockets passes through an axial thrust, so that whilst the mandrel advances through the inside the end of the pipe is formed with the determined geometry. Here there is the same problem of avoiding the problems of loss of orientation and increase in thicknesses where we can also appreciate how it is based on a straight geometry of the pipe, typical of in-line processes, and it is also observed how the process is divided in three successive phases with different mandrels or apparatus, two of heating and another one of forming.

### DESCRIPTION OF THE INVENTION

The present invention proposes an apparatus and a process of manufacturing sockets with the integration of an elastomeric gasket in oriented pipes from a blank produced by an in-batch bioriented pipe manufacturing process of the profile and certain mechanical properties. In other words, it is based on a determined geometry and with axial and circumferential orientation properties that are totally defined and which shall remain unaltered throughout the process in the parts subjected to the greatest stresses and the geometry shall be modified in less sensitive parts.

In accordance with this apparatus, the formation of the socket occurs in localized manner, preventing disorientation in undesired areas and allowing a better finish of the socket. The apparatus proposed allows the initial profile from the blank, or hereinafter end profile of the molecularly biorented pipe, to maintain its already oriented areas completely protected from heatings which may affect their orientation.

In accordance with this invention the end profile will incorporate the gasket before forming the socket, unlike other systems which introduce the gasket after the final formation of the socket.

The apparatus according to the invention comprises a single mandrel that has different sectors and whereby, with only axial displacements, it is possible to introduce the gasket, heat, support, homogenize and give a finish to the pipe socket. This is an important difference with other systems that use different mandrels and several steps to make the socket.

This mandrel preferably has diverse orifices in its sections which make it possible to create localized air flows in the areas to be heated, or which allow the application of a vacuum, contributing to the perfect modelling of the socket lip. The mandrel can heat or cool the different socket areas depending on its position in the axial shaft and the section thereof in contact with the socket.

The process for the formation of the socket lip is performed in 3 steps to achieve a perfect geometry and properties. These steps are homogenization, formation and tamping. The final cooling of the socket lip is performed by contact on its internal surface.

The heating, lip forming and cooling is, therefore, only performed with this mandrel which is a single-block tool which acts with axial movements and without internal mechanisms. In this way the apparatus of the present invention manages to produce the final socket with the integral gasket in a simple manner and in reduced time in comparison with other systems which use different mandrels in different phases.

The mandrel is of cylindrical configuration and is divided in several sectors and one of said sectors in several preferably metal segments, separated by grommets of insulating material, preferably of plastic, so that said segments and sectors may be at a different temperature.

It has been provided in general terms that the segments and the sectors are connected to means of heating and/or means of cooling regulated by a control unit which allows the selective and independent variation of the temperature of said segments and sectors to favour the modelling of the socket avoiding the disorientation of the pipe. These segments and sectors may have orifices for their connection to vacuum generation means controlled by a control unit, and these orifices or others may also be connected to said means of heating and/or to the means of cooling. Although air is used in the preferred embodiment, other fluids can be used such as heating and/or cooling fluids.

The mandrel therefore comprises a first sector which is formed by an assembly of at least three segments and three grommets with preferably coincident external diameter, which is the same as or greater than that of the external or nominal diameter of the bioriented pipe (ND).

The first segment of said first sector shows a pointed configuration that facilitates the entry of the mandrel in the end profile of the bioriented pipe, as well as facilitating the entry of the elastic gasket.

The second segment has orifices connected to different apparatus wherethrough it is possible to either absorb air from the environment by applying a vacuum or expulse air. A particular characteristic of this second segment is that it is preferably cooled and shall serve as a cooling element of the socket lip in the final phases of the forming thereof.

The third segment facilitates the positioning of the gasket and may also have orifices whereby vacuum or air pressure is applied. In this case, the third segment will preferably be heated to achieve temperatures close to the Vicat temperature of each plastic.

The mandrel additionally comprises, separated by one of the grommets, a second cylindrical sector, with diameter greater than that of the first sector. The external diameter of this second sector is of a diameter slightly greater than that of the diameter of the bioriented pipe (ND) so that when the execution process of the socket concludes the resulting opening in the pipe socket allows the introduction of the adjacent pipe which will be coupled in said socket.

This second sector also has orifices which can be connected both to vacuum and air pressure, so that different air flows can be achieved.

On the other hand, it has been provided that the end of the second sector, adjoining with the first sector, may be rounded to avoid friction of the plastic in the development of the process described.

This second sector is also preferably heated to a temperature close to the Vicat temperature of the plastic.

Additionally, the mandrel has a third sector, concentric and external to the second sector, equipped with orifices, which has a chamber open with the second sector at one of its ends. Precisely, the end profile of the pipe shall enter through this end for the subsequent forming of its socket.

An air flow can be created in this chamber, entering through a series of orifices and exiting through others, so that the lip can be precisely heated in the circulation of that air.

Additionally, the mandrel may incorporate a washer of elastic material which is positioned between the third sector and the second sector, which allows the passage of the end profile lip when the mandrel is coupled to the pipe, but which prevents the exit of the hot air from the chamber to the area of the profile which houses the gasket, so that it is not heated in any case and, hence, does not lose orientation.

To increase the protection and clearly differentiate the areas to be heated and those which must remain cool, the third sector may incorporate in its front end a projector of either air, water or any other fluid so that localized cooling occurs.

Another object of the present invention is the biaxially oriented plastic pipe socket with integral gasket manufacturing process, which is based on a socket in the end profile of the biaxially oriented plastic pipe configured by:
an insertion area adjacent to the portion with a nominal diameter of the pipe, of greater diameter than said nominal diameter,
a gasket housing area adjacent to the insertion area, with a variable diameter greater than that of the insertion area, and
a lip area adjacent to the housing area equipped with upward inclination, preferably less than 60°,

The process takes place in accordance with the following steps:
a) introduction of a gasket through the first sector of the mandrel until reaching the second sector which will serve as stop, being housed surrounding the third segment,
b) introduction of the mandrel together with the gasket within the end profile to introduce,
c) heating of the lip area above the Vicat temperature, so that the lip loses diameter until resting on the second sector which serves as a support to guarantee a regular shrinking,
d) axial withdrawal of the mandrel to allow the lip to contract and reach the third segment the lip being adapted to the external diameter thereof,
e) axial withdrawal of the mandrel so that the lip reaches the second segment and cools in contact therewith,
f) complete extraction of the mandrel to produce the socket.

Additionally, it is preferable that the process incorporates a tamping phase of the lip before the complete extraction, consisting of moving the mandrel towards the profile to touch its second sector against the lip, then cooling it to obtain a more regular form. Complementarily, it contemplates the possibility that the lip cooling is forced through the projection of air or another coolant from said projector on the lip to reduce the cooling time.

On the other hand, it should be indicated that the diameter of the third segment may be slightly less than the diameter of the second segment, thus facilitating that, after the partial removal of the mandrel that determines the passage of the lip from the third to the second segment in accordance with that described in phase e), the lip perfectly adapts to the second segment for its final cooling.

It has preferably been provided that the socket of the end profile of the bioriented pipe whereon this process is applied has the gasket housing area divided in two portions: a first portion of upward inclination positioned after the insertion area and a second portion of internally concave configuration which extends after the first portion and ends in the lip area, this second portion being formed with the greatest axial orientation of the whole socket due to the fact that it must withstand a greater axial effort.

During the heating phase it has been provided that the temperature T1 of the first segment is ambient temperature, the temperature T2 of the second segment is below ambient temperature and the temperatures: T3 of the third segment, T4 of the second section and T5 of the third section are close to the Vicat temperature of the plastic.

### DESCRIPTION OF THE DRAWINGS

To complete the description being made and with the object of helping towards a better understanding of the characteristics of the invention, in accordance with a preferred example of practical embodiment thereof, a set of drawings is attached as an integral part of said description wherein the following has been represented with illustrative and non-limiting character:
Figure 1a.- Shows a first possible configuration of the end profile of the bioriented pipe.
Figure 1b.- Shows a second possible configuration of the end profile of the bioriented pipe.
Figure 2.- Shows a view of the upper half of the end profile of a bioriented pipe in the position wherein the gasket is found already integrated in the socket and the mandrel introduced in the socket before forming of the lip.
Figure 3.- Shows the different forming phases of the socket using the apparatus
Figure 4.- Shows a schematic view of the apparatus where the relation of the mandrel with the means of heating, cooling and vacuum is observed.

### PREFERRED EMBODIMENT OF THE INVENTION

In light of the figures, the preferred embodiment of the apparatus and the process of manufacturing sockets of biaxially oriented plastic pipes with integral gasket (12) which constitutes the object of this invention are shown below.

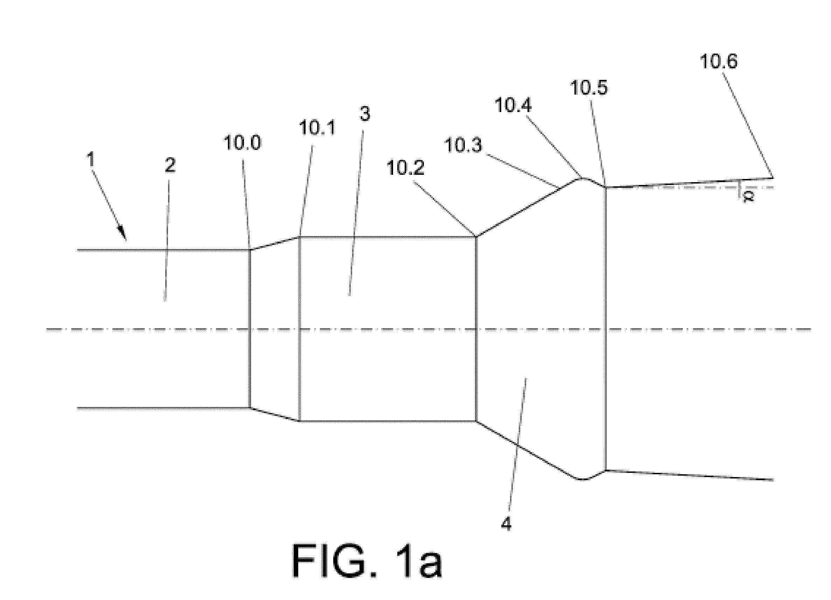

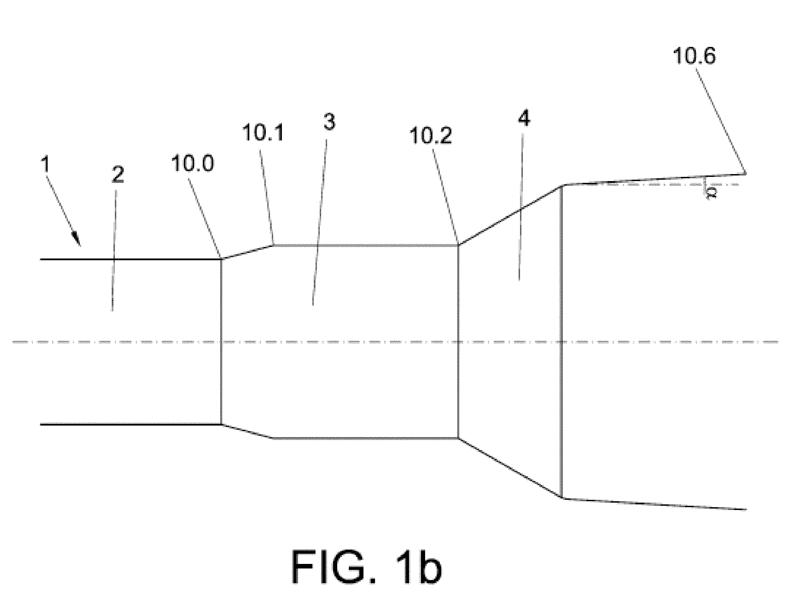

The process consists of a first phase in the production of a biaxially oriented pipe (1) with semi-manufactured socket such as that shown in figure 1a, although it may be based on the formation of a biaxially oriented pipe with the geometry represented in figure 1 b.

As can be observed in figure 1a, the end profile of the pipe has an area of nominal diameter (2), after which an insertion area (3) is found, which is fully formed (area between points 10.0, 10.1 and 10.2), and that next is found a housing area (4) of the elastic gasket which is perfectly formed (area between points 10.2, 10.3, 10.4 and 10.5).

The portion between points (10.3 and 10.5) is the part of the socket subjected to greatest axial stress, for which purpose the greatest degree of axial orientation of the whole pipe is found in this portion, precisely to withstand this stress. We then observe what will be the socket lip, which is initially different to the final form that will be achieved by the process object of this invention, and which may be between points (10.3 and 10.6), or may start from the apex of the profile from point (10.4), or may start from slightly below point (10.5).

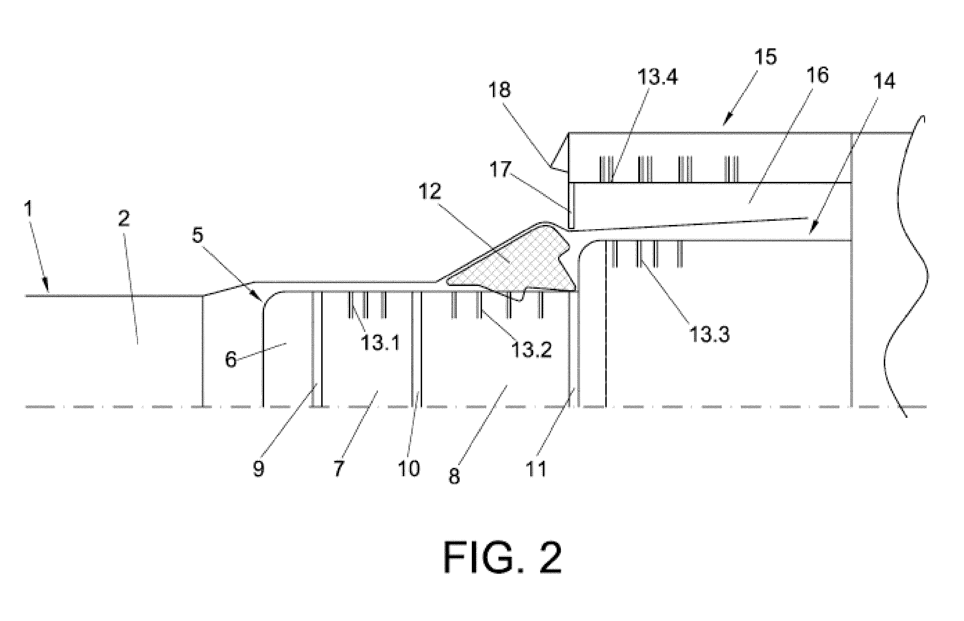

The apparatus used to carry out the forming of the socket according to the invention is represented in figure 2 and comprises a cylindrical mandrel formed by a first sector (5) subdivided in several segments (6, 7, 8). This division is performed by grommets (9, 10, 11) of the same external diameter.

As observed in figure 2, this first sector (5) has a diameter greater than the external diameter of the area of the pipe with nominal diameter (2). The first segment (6) has a pointed form and simply serves to facilitate the entry of the mandrel in the profile, as well as to facilitate the entry and front positioning of the gasket (12) which will be positioned around the third segment (8). The second segment (7) has orifices (13.1) connected to different apparatus where it is possible to either apply a vacuum absorbing the air from the atmosphere or expulse air. A special characteristic of this second segment (7) is that it is preferably cooled and shall serve as a cooling element of the socket lip.

The third segment (8) may also have orifices (13.2) where vacuum or air pressure can be applied. This third segment (8) is heated to achieve temperature close to the Vicat temperature of each plastic.

Then, and separated by the grommet (11), we have the second sector (14) of the mandrel, with a diameter greater than that first sector (5). The diameter of this second sector (14) is slightly greater than that of the diameter of the area with a diameter nominal (2).

This second sector (14) also has orifices (13.3) which can be connected both to vacuum and air pressure, whereby it is possible to achieve different air flows, as well as heated to a temperature close to the Vicat temperature of the plastic.

Concentric to the second sector (14) is the third sector (15) of the mandrel, which also has orifices (13.4), with a chamber (16) being defined between the second sector (14) and the third sector (15) open at one of the ends wherethrough the plastic profile is introduced. In this chamber (16), it is possible to create an air flow that enters through the orifices (13.3) of the second sector (14) and which exit through the orifices (13.4) of the third sector (15) or vice-versa, so that the lip area may be precisely heated in the circulation of that air.

Figure 2 shows a spring washer (17) which starts from the third sector (15), which allows the entry of the profile lip before its formation, but which prevents the exit of the hot air to the profile area between points (10.3 and 10.5), so that it is not heated in any case and, hence, the orientation is not lost.

To increase the protection and clearly differentiate the areas to be heated and those which must remain cool, the third sector (15) incorporates a projector (18) oriented towards the first sector (5), of air, water or any other fluid which makes it possible to perform a localized cooling.

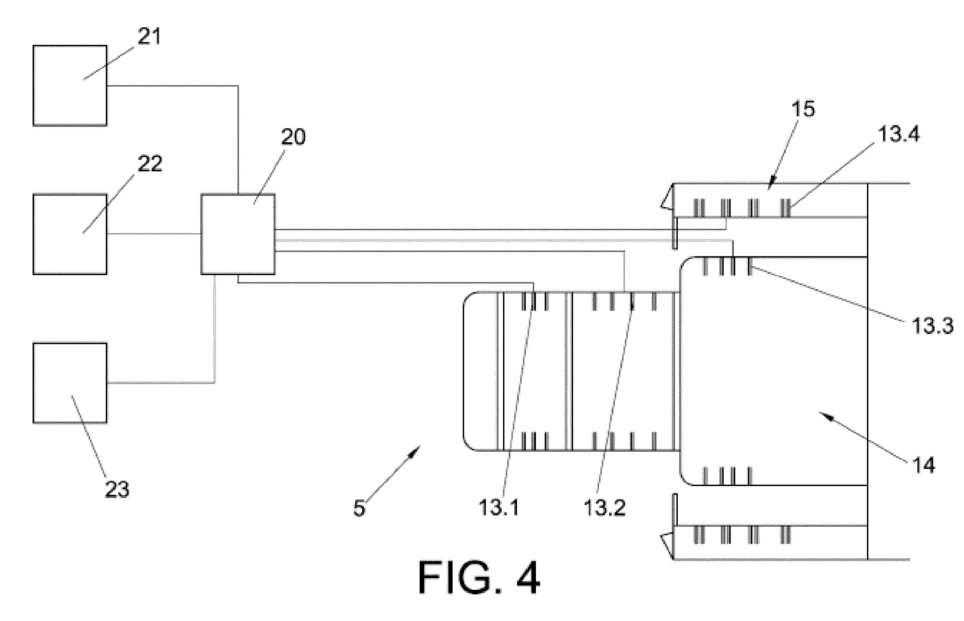

Figure 4 shows the mandrel connected to the means of heating (21), to the means of cooling (22) and to the vacuum generation unit (23), with intermediation of a control unit (20) which controls the selective regulation of the temperature and vacuum generation in the different segments (6, 7, 8) and sectors (14, 15) of the mandrel.

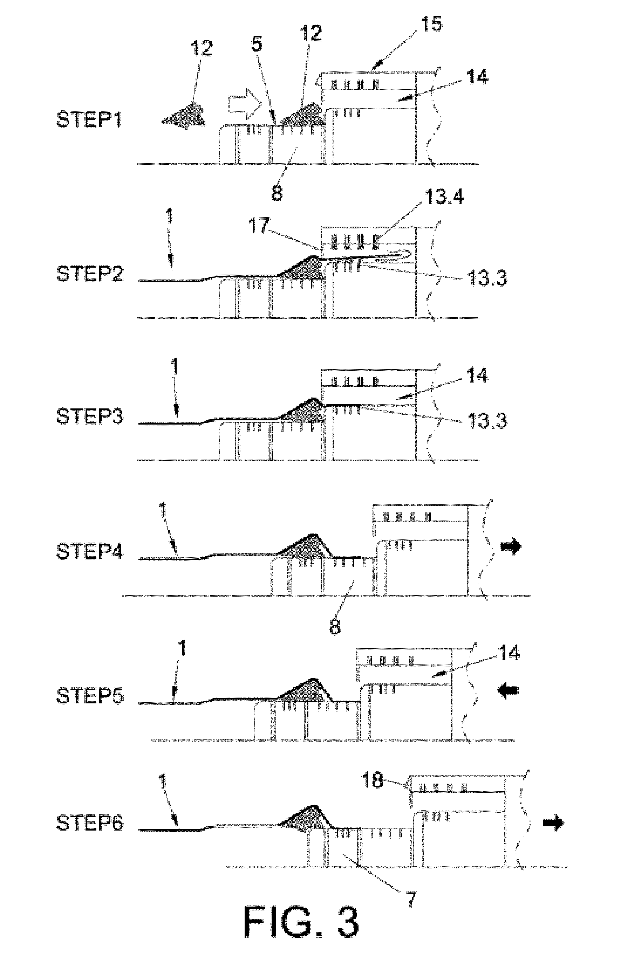

Figure 3 shows the steps of the manufacturing process 1 to 6, the process starts by the introduction of the gasket (12) in the first sector (5) of the mandrel. The gasket (12) is introduced until reaching the second sector (14), where it serves as a stop due to being of a larger size. The gasket (12) is housed surrounding the third segment (8) as shown in step 1 of figure 3.

In step 2, the mandrel object of the invention together with the gasket (12) is axially displaced and is introduced within the plastic profile (1) to introduce, again until the profile wall (side between point 10.2 and 10.4) comes up against the gasket (12). Obviously, the axial movement may also occur in opposite direction, it being the profile (1) that which moves until surrounding the mandrel.

At this moment, the temperatures of the different sections are different thanks to their heating or cooling systems, T1 the temperature of the first segment (6) being the ambient temperature, T2 the temperature of the second segment (7) being below ambient temperature and T3 being the temperature of the third segment (8), T4 the temperature of the second sector (14) and T5 the temperature of the third sector (15), all of them T3, T4 and T5 close to the Vicat temperature of the plastic.

Once the profile (1) is introduced with the integral gasket (12), the lip area is heated (between points 10.5 and 10.6), in part due to the second sector (14) and the third sector (15) being hot, and in part because there is an air flow exiting through the orifices (13.4), and entering through the orifices (13.3). For this purpose, orifices (13.4) will have been connected to a pressurized air flow and orifices (13.3) to a vacuum system.

The presence of the spring washer (17) serves to confine the air and that the heating is more precise and efficient, and the flow better driven.

Then, in step 3, once the lip is heated above the Vicat temperature, thanks to the memory that the material preserves of the orientation, the lip loses diameter until resting on the second sector (14), which will serve as support to guarantee a regular shrinking. In this step the lip may have its length reduced and its thickness increased if the prior orientation provided was not only tangential but axial. The orifices (13.3) acting as vacuum may contribute to there being a greater support of the lip in this second sector (14).

In step 4, the mandrel is axially removed and the lip is allowed to contract and reach the third segment (8), with a final diameter wherein it must remain on finalizing the process.

To improve the final appearance, step 5 shows how the mandrel moves little by little towards the profile (1) to touch the wall of the second sector (14), tamp the lip and leave the pipe (1) with a more regular form on the edge.

Finally, in step 6, the mandrel moves towards the right again until the second segment (7) coincides with the lip supported and hot. Due to the fact that the temperature T2 of this second segment (7) is less than the Vicat temperature of the pipe, the lip is cooled and, therefore, its form is maintained stable after a certain time. It is possible to increase this cooling by the projection of air or another cooling fluid on the lip with the projector (18) to reduce the cooling time.

Finally, the mandrel is completely removed and the pipe socket is completed.

## Claims

1. Biaxially oriented plastic pipe socket with integrated gasket manufacturing apparatus, which comprises means of heating (21), means of cooling (22), and a cylindrical mandrel which comprises:
a first sector (5), of external diameter the same as or greater than that of the external diameter of the biaxially oriented pipe (1), designed to receive the end profile of said pipe and with an external diameter suitable for introducing the gasket (12),
a second cylindrical sector (14), with diameter greater than that of the first sector (5), which is constituted as stop of the gasket (12), and
a third sector (15), concentric and external to the second sector (14), **characterized in that** the first sector (5) is formed by at least three segments (6, 7, 8) separated by grommets (9, 10, 11), the second sector (14) also being separated from the first sector (5) by one of said grommets (11), and a chamber (16) open with the second sector (14) at one of its ends is defined between the second sector (14) and the third sector (15), wherein a washer (17) is found which allows the entry of the end profile and isolates the chamber (16) from the outside,
as well as **in that** at least two of said segments (10, 11) of the first sector (5), the second sector (14) and the third sector (15) are connected to the means of heating (21) and/or to the means of cooling (22) regulated by a control unit (20) which allows the selective and independent variation of the temperature of said segments (10, 11) and sectors (14, 15) and therefore of the pipe to favour the modelling of the socket avoiding the disorientation of the pipe.

2. Biaxially oriented plastic pipe socket with integrated gasket manufacturing apparatus in accordance with claim 1, **characterized in that** it comprises vacuum generation means (23) connected to orifices (13.1, 13.2, 13.3, 13.4) defined in each one of the sectors (5, 14, 15) with independent regulation of the vacuum to be generated in said sectors (5, 14, 15) by the control unit (20).

3. Biaxially oriented plastic pipe socket with integrated gasket manufacturing apparatus in accordance with claim 1, **characterized in that** it comprises orifices (13.1, 13.2, 13.3, 13.4) in each one of the sectors (5, 14, 15) connected to the means of heating and/or cooling for the circulation of a heating and/or cooling fluid.

4. Biaxially oriented plastic pipe socket with integrated gasket manufacturing apparatus in accordance with claim 2, **characterized in that** the orifices (13.1, 13.2, 13.3, 13.4) are also connected to the means of heating (21) and/or cooling (22) for the circulation of heating and/or cooling fluid, and the fluid is air.

5. Biaxially oriented plastic pipe socket with integrated gasket manufacturing apparatus in accordance with any one of claims 2 to 4, **characterized in that** the orifices (13.1, 13.2) of the first sector (5) are respectively defined in the second segment (7) and in the third segment (8).

6. Biaxially oriented plastic pipe socket with integral gasket manufacturing apparatus in accordance with claim 4, **characterized in that** the orifices (13.3) of the second sector (14) are connected to the vacuum generating unit when the orifices (13.4) of the third sector (15) are connected to the means of heating (21) or vice-versa.

7. Biaxially oriented plastic pipe socket with integrated gasket manufacturing apparatus in accordance with claim 1, **characterized in that** the means of heating (21) is adapted to heat to a temperature so that it allows the segments (6, 7, 8) and the sectors (5, 14, 15) to reach the Vicat temperature of the plastic.

8. Biaxially oriented plastic pipe socket with integrated gasket manufacturing apparatus in accordance with claim 1, **characterized in that** the third sector (15) incorporates at its front end a projector (18) of cooling fluid oriented towards the first sector (5) which allows a localized cooling to be performed.

9. Biaxially oriented plastic pipe socket with integrated gasket manufacturing apparatus in accordance with claim 1, **characterized in that** the third segment (8) has a diameter slightly less than that of the second segment (7).

10. Biaxially oriented plastic pipe socket with integrated gasket manufacturing process, which makes use of the apparatus described in any one of the previous claims and which is based on a socket defined in the end profile of the biaxially oriented plastic pipe (1) configured by:
an insertion area (3) adjacent to the portion with a nominal diameter (2) of the pipe, of greater diameter than said nominal diameter,
a gasket housing area (4) adjacent to the insertion area (3), with a variable diameter greater than that of the insertion area (3), and
a lip area adjacent to the housing area (4) equipped with upward inclination, preferably less than 60°,
**characterized in that** it comprises the following phases:
a) introduction of a gasket (12) through the first sector (5) of the mandrel until reaching the second sector (14) which will serve as stop, being housed surrounding the third segment (8),
b) introduction of the mandrel together with the gasket (12) within the end profile to introduce,
c) heating of the lip area so that the lip loses diameter until resting on the second sector (14) which serves as a support to guarantee a regular shrinking,
d) axial withdrawal of the mandrel to allow the lip to contract and reach the third segment (8) the lip being adapted to the external diameter thereof,
e) axial withdrawal of the mandrel so that the lip reaches the second segment and cools in contact therewith,
f) complete extraction of the mandrel to produce the socket.

11. Biaxially oriented plastic pipe socket with integrated gasket manufacturing process in accordance with claim 10, **characterized in that** the gasket housing area (4) has two portions, a first portion (10.2,10.3) of upward inclination positioned after the insertion area (3) and a second portion (10.3, 10.4, 10.5) of internally concave configuration which extends after the first portion (10.2, 10.3) and ends in the lip area, this second portion (10.3, 10.4, 10.5) being formed with the greatest axial orientation of the whole socket.

12. Biaxially oriented plastic pipe socket with integrated gasket manufacturing process in accordance with any one of claims 10 or 11, **characterized in that** during the heating phase the temperature T1 of the first segment (6) is ambient temperature, the temperature T2 of the second segment (7) is below ambient temperature and, the temperatures: T3 of the third segment (8), T4 of the second sector (14) and T5 of the third sector (15), are close to the Vicat temperature of the plastic.

13. Biaxially oriented plastic pipe socket with integrated gasket manufacturing process in accordance with any one of claims 10 or 11, **characterized in that** comprises an additional phase of tamping of the lip before the axial withdrawal described in phase e), consisting of moving the mandrel towards the profile to touch its second sector (14) against the lip, then cooling it via the cooling fluid which exits the second segment (7).

14. Biaxially oriented plastic pipe socket with integrated gasket manufacturing process in accordance with claim 13, **characterized in that** the cooling of the lip is additionally forced through the projection of coolant from the projector (18) on the lip.

## Patentansprüche

1. Herstellungsausrüstung für einen biaxial ausgerichteten Kunststoffrohrstutzen mit integrierter Dichtung, die Heizmittel (21), Kühlungsmittel (22) und einen zylindrischen Dorn umfasst, der Folgendes umfasst:
einen ersten Abschnitt (5) mit einem Außendurchmesser gleich oder größer als der Außendurchmesser des biaxial ausgerichteten Rohrs (1), der dazu ausgelegt ist, das Endprofil dieses Rohrs aufzunehmen, und mit einem Außendurchmesser, der zur Einführung der Dichtung (12) geeignet ist;
einen zweiten zylindrischen Abschnitt (14) mit einem größeren Durchmesser als der des ersten Abschnitts (5), der als Anschlag der Dichtung (12) ausgelegt ist; und
einen zum zweiten Abschnitt (14) konzentrischen und externen dritten Abschnitt (15);
**dadurch gekennzeichnet, dass** der erste Abschnitt (5) aus mindestens drei, durch Hülsen (9, 10, 11) getrennten Segmente (6, 7, 8) gebildet ist, wobei der zweite Abschnitt (14) ebenfalls von einer dieser Hülsen (11) vom ersten Abschnitt (5) getrennt wird und wobei eine mit dem zweiten Abschnitt (14) an einem der Enden offene Kammer (16) zwischen dem zweiten Abschnitt (14) und dem dritten Abschnitt (15) definiert ist, worin sich eine Unterlegscheibe (17) befindet, die den Eintritt des Endprofils erlaubt und die Kammer (16) nach außen hin isoliert, sowie dadurch, dass mindestens zwei dieser Segmente (10, 11) des ersten Abschnitts (5), des zweiten Abschnitts (14) und des dritten Abschnitts (15) mit dem Heizmittel (21) und/oder dem Kühlungsmittel (22) verbunden sind, das von einer Steuereinheit (20) geregelt wird, welche die selektive und unabhängige Variation der Temperatur dieser Segmente (10, 11) und Abschnitte (14, 15) und somit die des Rohrs erlaubt, um die Modellierung des Stutzens unter Vermeidung der Falschausrichtung des Rohrs zu erleichtern.

2. Herstellungsausrüstung für einen biaxial ausgerichteten Kunststoffrohrstutzen mit integrierter Dichtung nach Anspruch 1, **dadurch gekennzeichnet, dass** diese Vakuumerzeugungsmittel (23) umfasst, die mit Öffnungen (13.1, 13.2, 13.3, 13.4) verbunden sind, die in jedem einzelnen der Abschnitte (4, 14,15) definiert sind, wobei das in diesen Abschnitten (5, 14, 15) zu erzeugende Vakuum mit der Steuereinheit (20) unabhängig geregelt werden kann.

3. Herstellungsausrüstung für einen biaxial ausgerichteten Kunststoffrohrstutzen mit integrierter Dichtung nach Anspruch 1, **dadurch gekennzeichnet, dass** diese Öffnungen (13.1, 13.2, 13.3, 13.4) in jedem einzelnen der Abschnitte (5, 14, 15) umfasst, die mit dem Heiz- und/oder Kühlungsmittel zwecks Umwälzung eines Heiz- und/oder Kühlfluids verbunden sind.

4. Herstellungsausrüstung für einen biaxial ausgerichteten Kunststoffrohrstutzen mit integrierter Dichtung nach Anspruch 2, **dadurch gekennzeichnet, dass** die Öffnungen (13.1, 13.2, 13.3, 13.4) ebenfalls mit dem Heizmittel (21) und/oder Kühlungsmittel (22) zwecks Umwälzung eines Heiz- und/oder Kühlfluids verbunden sind und dass dieses Fluid Luft ist.

5. Herstellungsausrüstung für einen biaxial ausgerichteten Kunststoffrohrstutzen mit integrierter Dichtung nach einem der Ansprüche 2 bis 4, **dadurch gekennzeichnet, dass** die Öffnungen (13.1, 13.2) des ersten Abschnitts (5) jeweils im zweiten Segment (7) und im dritten Segment (8) definiert sind.

6. Herstellungsausrüstung für einen biaxial ausgerichteten Kunststoffrohrstutzen mit integrierter Dichtung nach Anspruch 4, **dadurch gekennzeichnet, dass** die Öffnungen (13.3) des zweiten Abschnitts (14) mit der Vakuumerzeugungseinheit verbunden sind, wenn die Öffnungen (13.4) des dritten Abschnitts (15) mit dem Heizmittel (21) verbunden sind bzw. umgekehrt.

7. Herstellungsausrüstung für einen biaxial ausgerichteten Kunststoffrohrstutzen mit integrierter Dichtung nach Anspruch 1, **dadurch gekennzeichnet, dass** das Heizmittel (21) dazu ausgelegt ist, bis zu einer Temperatur zu erhitzen, sodass die Segmente (6, 7, 8) und die Abschnitte (5, 14, 15) die Vicat-Temperatur des Kunststoffs erreichen können.

8. Herstellungsausrüstung für einen biaxial ausgerichteten Kunststoffrohrstutzen mit integrierter Dichtung nach Anspruch 1, **dadurch gekennzeichnet, dass** der dritte Abschnitt (15) an seinem vorderen Ende einen Projektor (18) für Kühlfluid einschließt, der in Richtung des ersten Abschnitts (5) ausgerichtet ist und die Durchführung einer eingegrenzten Kühlung erlaubt.

9. Herstellungsausrüstung für einen biaxial ausgerichteten Kunststoffrohrstutzen mit integrierter Dichtung nach Anspruch 1, **dadurch gekennzeichnet, dass** der dritte Abschnitt (8) einen Durchmesser besitzt, der geringfügig kleiner als der des zweiten Segments (7) ist.

10. Herstellungsverfahren für einen biaxial ausgerichteten Kunststoffrohrstutzen mit integrierter Dichtung, bei dem die in einem der vorstehenden Ansprüche beschriebene Ausrüstung verwendet wird und das auf einem Stutzen beruht, der im Endprofil des biaxial ausgerichteten, Kunststoffrohrs (1) definiert ist, gebildet aus:
einem Einführungsbereich (3), der an den Teil mit einem Nenndurchmesser (2) des Rohrs angrenzt und dessen Durchmesser größer als dieser Nenndurchmesser ist;
einem Bereich zur Aufnahme der Dichtung (4), der an den Einführungsbereich (3) angrenzt, mit einem variablen Durchmesser größer als der des Einführungsbereichs (3); und
einem Lippenbereich, der an den Aufnahmebereich (4) angrenzt und mit einer aufwärts gerichteten Neigung ausgestattet ist, vorzugsweise unter 60°;
**dadurch gekennzeichnet, dass** dieses die folgenden Phasen umfasst:
a) Einführung einer Dichtung (12) durch den ersten Abschnitt (5) des Dorns, bis der zweite Abschnitt (14) erreicht wird, der als Anschlag dient, wobei die Dichtung den dritten Abschnitt (8) umschließend aufgenommen wird,
b) Einführung des Dorns zusammen mit der Dichtung (12) innerhalb des Endprofils, zur Einleitung der
c) Erhitzung des Lippenbereichs, sodass die Lippe an Durchmesser verliert, bis diese auf dem zweiten Abschnitt (14) ruht, der als Stützt dient, um ein regelmäßiges Schrumpfen sicherzustellen,
d) axiale Zurückziehung des Dorns, damit sich die Lippe zusammenziehen und das dritte Segment (8) erreichen kann, wobei sich die Lippe an den Außendurchmesser desselben anpasst,
e) axiale Zurückziehung des Dorns, sodass die Lippe das zweite Segment erreicht und sich in Kontakt damit abkühlt,
f) vollständige Entfernung des Dorns, um den Stutzen herzustellen.

11. Herstellungsverfahren für einen biaxial ausgerichteten Kunststoffrohrstutzen mit integrierter Dichtung nach Anspruch 10, **dadurch gekennzeichnet, dass** der Bereich zur Aufnahme der Dichtung (4) zwei Teile besitzt, einen ersten, nach dem Einführungsbereich (3) positionierten Teil (10.2, 10.3) mit einer aufwärts gerichteten Neigung und einen zweiten, intern konkav ausgeführten Teil (10.3, 10.4, 10.5), der sich nach dem ersten Teil (10.2, 10.3) erstreckt und im Lippenbereich endet, wobei dieser zweite Teil (10.3, 10.4, 10.5) mit der größten axialen Ausrichtung des gesamten Stutzens gebildet ist.

12. Herstellungsverfahren für einen biaxial ausgerichteten Kunststoffrohrstutzen mit integrierter Dichtung nach einem der Ansprüche 10 oder 11, **dadurch gekennzeichnet, dass** während der Heizphase die Temperatur T1 des ersten Segments (6) die Umgebungstemperatur ist, die Temperatur T2 des zweiten Segments (7) unter der Umgebungstemperatur liegt und die Temperaturen T3 des dritten Segments (8), T4 des zweiten Abschnitts (14) und T5 des dritten Abschnitts (15) in der Nähe der Vicat-Temperatur des Kunststoffs liegen.

13. Herstellungsverfahren für einen biaxial ausgerichteten Kunststoffrohrstutzen mit integrierter Dichtung nach einem der Ansprüche 10 oder 11, **dadurch gekennzeichnet, dass** dieses eine zusätzliche Phase umfasst, bei der die Lippe vor der in der Phase e) beschriebenen axialen Zurückziehung verdämmt wird, indem der Dorn in Richtung des Profils bewegt wird, um dessen zweiten Abschnitt (14) gegen die Lippe zu drücken, und diese dann mit dem Kühlfluid gekühlt wird, das aus dem zweiten Segment (7) austritt.

14. Herstellungsverfahren für einen biaxial ausgerichteten Kunststoffrohrstutzen mit integrierter Dichtung nach Anspruch 13, **dadurch gekennzeichnet, dass** die Kühlung der Lippe zusätzlich erzwungen wird, indem der Projektor (18) Kühlmittel auf die Lippe schleudert.

## Revendications

1. Appareil de fabrication d'embouts de tubes en plastique à orientation biaxiale comportant un joint d'étanchéité intégré, qui comprend des moyens de chauffage (21), des moyens de refroidissement (22), et un mandrin cylindrique qui comporte :
un premier secteur (5), d'un diamètre externe identique ou supérieur au diamètre externe du tube à orientation biaxiale (1), conçu pour recevoir le profil d'extrémité dudit tube et d'un diamètre externe adapté à l'introduction du joint d'étanchéité (12),
un deuxième secteur cylindrique (14), d'un diamètre supérieur à celui du premier secteur (5), qui constitue la pièce d'arrêt du joint d'étanchéité (12), et
un troisième secteur (15), concentrique et extérieur au second secteur (14),
**caractérisé en ce que** le premier secteur (5) est formé d'au moins trois segments (6, 7, 8) séparés par des oeillets (9, 10, 11), le deuxième secteur (14) étant également séparé du premier secteur (5) par l'un desdits oeillets (11), et une chambre (16) ouverte sur le deuxième secteur (14) à l'une de ses extrémités est définie entre le deuxième secteur (14) et le troisième secteur (15), dans lequel on trouve une rondelle (17) qui permet l'entrée du profil d'extrémité et isole la chambre (16) de l'extérieur,
et **en ce que** au moins deux desdits segments (10, 11) du premier secteur (5), le deuxième secteur (14) et le troisième secteur (15) sont raccordés aux moyens de chauffage (21) et/ou aux moyens de refroidissement (22) régulés par une unité de contrôle (20) qui permet la variation sélective et indépendante de la température desdits segments (10, 11) et secteurs (14, 15) et par conséquent du tube pour favoriser le modelage de l'embout en évitant la dérive du tube.

2. Appareil de fabrication d'embouts de tubes en plastique à orientation biaxiale comportant un joint d'étanchéité intégré selon la revendication 1, **caractérisé en ce qu'**il comprend des moyens générateurs de vide (23) raccordés aux orifices (13.1, 13.2, 13.3, 13.4) définis dans chacun des secteurs (5, 14, 15) avec régulation indépendante du vide devant être généré dans lesdits secteurs (5, 14, 15) par l'unité de contrôle (20).

3. Appareil de fabrication d'embouts de tubes en plastique à orientation biaxiale comportant un joint d'étanchéité intégré selon la revendication 1, **caractérisé en ce qu'**il comprend des orifices (13.1, 13.2, 13.3, 13.4) dans chacun des secteurs (5, 14, 15) raccordés aux moyens de chauffage et/ou de refroidissement pour la circulation d'un fluide de chauffage et/ou de refroidissement.

4. Appareil de fabrication d'embouts de tubes en plastique à orientation biaxiale comportant un joint d'étanchéité intégré selon la revendication 2, **caractérisé en ce que** les orifices (13.1, 13.2, 13.3, 13.4) sont également raccordés aux moyens de chauffage (21) et/ou de refroidissement (22) pour la circulation de fluide de chauffage et/ou de refroidissement, et le fluide est de l'air.

5. Appareil de fabrication d'embouts de tubes en plastique à orientation biaxiale comportant un joint d'étanchéité intégré selon n'importe laquelle des revendications 2 à 4, **caractérisé en ce que** les orifices (13.1, 13.2) du premier secteur (5) sont respectivement définis dans le deuxième segment (7) et dans le troisième segment (8).

6. Appareil de fabrication d'embouts de tubes en plastique à orientation biaxiale comportant un joint d'étanchéité intégré selon la revendication 4, **caractérisé en ce que** les orifices (13.3) du deuxième secteur (14) sont raccordés à l'unité de génération de vide alors que les orifices (13.4) du troisième secteur (15) sont raccordés aux moyens de chauffage (21) ou vice versa.

7. Appareil de fabrication d'embouts de tubes en plastique à orientation biaxiale comportant un joint d'étanchéité intégré selon la revendication 1, **caractérisé en ce que** le moyen de chauffage (21) est adapté pour chauffer à une température telle qu'elle permette aux segments (6, 7, 8) et aux secteurs (5, 14, 15) d'atteindre la température Vicat du plastique.

8. Appareil de fabrication d'embouts de tubes en plastique à orientation biaxiale comportant un joint d'étanchéité intégré selon la revendication 1, **caractérisé en ce que** le troisième secteur (15) comporte à son extrémité avant un projecteur (18) de fluide de refroidissement orienté vers le premier secteur (5) qui permet de procéder à un refroidissement localisé.

9. Appareil de fabrication d'embouts de tubes en plastique à orientation biaxiale comportant un joint d'étanchéité intégré selon la revendication 1, **caractérisé en ce que** le diamètre du troisième segment (8) est légèrement inférieur à celui du deuxième segment (7).

10. Procédé de fabrication d'embouts de tubes en plastique à orientation biaxiale comportant un joint d'étanchéité intégré, dans lequel est utilisé l'appareil décrit dans n'importe laquelle des revendications précédentes et qui repose sur un embout défini dans le profil d'extrémité du tube en plastique à orientation biaxiale (1) configuré par :
une zone d'insertion (3) adjacente à la portion d'un diamètre nominal (2) du tube, de plus grand diamètre que ledit diamètre nominal,
une zone de logement du joint d'étanchéité (4) adjacente à la zone d'insertion (3), d'un diamètre variable supérieur à celui de la zone d'insertion (3), et
une zone de lèvre adjacente à la zone de logement (4) dotée d'une inclinaison vers le haut, de préférence inférieure à 60°,
**caractérisé en ce qu'**il comporte les phases suivantes :
a) introduction d'un joint d'étanchéité (12) à travers le premier secteur (5) du mandrin jusqu'à ce qu'il atteigne le deuxième secteur (14) qui servira de pièce d'arrêt, étant logé tout autour du troisième segment (8),
b) introduction du mandrin conjointement avec le joint d'étanchéité (12) à l'intérieur du profil d'extrémité à introduire,
c) chauffage de la zone de lèvre pour que la lèvre perde du diamètre jusqu'à ce qu'elle repose sur le deuxième secteur (14) qui sert de support pour garantir un rétrécissement régulier,
d) retrait axial du mandrin pour permettre à la lèvre de se contracter et d'atteindre le troisième segment (8) la lèvre étant adaptée au diamètre externe de ce dernier,
e) retrait axial du mandrin pour que la lèvre atteigne le deuxième segment et refroidisse au contact de ce dernier,
f) extraction complète du mandrin pour produire l'embout.

11. Procédé de fabrication d'embouts de tubes en plastique à orientation biaxiale comportant un joint d'étanchéité intégré selon la revendication 10, **caractérisé en ce que** la zone de logement du joint d'étanchéité (4) possède deux portions, une première portion (10.2, 10.3) d'inclinaison vers le haut placée après la zone d'insertion (3) et une seconde portion (10.3, 10.4, 10.5) de configuration concave à l'intérieur qui s'étend après la première portion (10.2, 10.3) et se termine dans la zone de lèvre, cette seconde portion (10.3, 10.4, 10.5) étant formée avec la plus grande orientation axiale de la totalité de l'embout.

12. Procédé de fabrication d'embouts de tubes en plastique à orientation biaxiale comportant un joint d'étanchéité intégré selon n'importe laquelle des revendications 10 ou 11, **caractérisé en ce que** durant la phase de chauffage la température T1 du premier segment (6) est la température ambiante, la température T2 du deuxième segment (7) est inférieure à la température ambiante et, les températures : T3 du troisième segment (8), T4 du deuxième secteur (14) et T5 du troisième secteur (15), sont proches de la température Vicat du plastique.

13. Procédé de fabrication d'embouts de tubes en plastique à orientation biaxiale comportant un joint d'étanchéité intégré selon n'importe laquelle des revendications 10 ou 11, **caractérisé en ce qu'**il comprend une phase supplémentaire de compactage de la lèvre avant le retrait axial décrit en phase e), consistant à déplacer le mandrin en direction du profil pour que son deuxième secteur (14) touche la lèvre, puis à le refroidir avec le fluide de refroidissement qui sort du deuxième segment (7).

14. Procédé de fabrication d'embouts de tubes en plastique à orientation biaxiale comportant un joint d'étanchéité intégré selon la revendication 13, **caractérisé en ce que** le refroidissement de la lèvre est en outre forcé via la projection de fluide réfrigérant à partir du projecteur (18) sur la lèvre.
